# EUROPÄISCHE PATENTSCHRIFT

(11) **EP 3 846 984 B1**
(45) Veröffentlichungstag und Bekanntmachung des Hinweises auf die Patenterteilung: **07.09.2022**
(21) Anmeldenummer: 18800536.7
(22) Anmeldetag: 30.10.2018
(51) Int. Cl.: B25J 15/12

(54) **GREIFFINGER MIT GEKRÜMMTEN ABSTANDSELEMENTEN SOWIE ADAPTIVE GREIFVORRICHTUNG**
GRIPPING FINGER HAVING CURVED SPACING ELEMENTS, AND ADAPTIVE GRIPPING DEVICE
DOIGT DE PRÉHENSION COMPRENANT DES ÉLÉMENTS D'ESPACEMENT COURBÉS AINSI QUE DISPOSITIF DE PRÉHENSION ADAPTATIF

(43) Veröffentlichungstag der Anmeldung: 14.07.2021
(73) Patentinhaber: Siemens Aktiengesellschaft, 80333 München (DE)
(72) Erfinder: DÜRR, Matthias, 90473 Nürnberg (DE)
(86) Internationale Anmeldenummer: PCT/EP2018/079650
(87) Internationale Veröffentlichungsnummer: WO 2020/088741

(56) Entgegenhaltungen:
- CN-A- 107 671 878
- DE-A1-102014 014 891
- JP-A- 2017 001 113
- US-A1- 2018 117 773
- BASSON C I ET AL: "Validating object conformity through geometric considerations of gripper mechanisms", 2017 24TH INTERNATIONAL CONFERENCE ON MECHATRONICS AND MACHINE VISION IN PRACTICE (M2VIP), IEEE, 21. November 2017 (2017-11-21), Seiten 1-6, XP033277484, DOI: 10.1109/M2VIP.2017.8211497 [gefunden am 2017-12-14]

## Beschreibung

Die vorliegende Erfindung betrifft einen Greiffinger für eine adaptive Greifvorrichtung. Der Greiffinger umfasst ein erstes Bandelement und ein zweites Bandelement, welche flexibel ausgebildet sind. Darüber hinaus umfasst der Greiffinger eine Mehrzahl von Abstandselementen, welche zwischen dem ersten Bandelement und dem zweiten Bandelement angeordnet sind. Dabei ist ein erstes Ende der jeweiligen Abstandselemente mit dem ersten Bandelement bewegbar verbunden und ein gegenüberliegendes zweites Ende der jeweiligen Abstandselemente ist mit dem zweiten Bandelement bewegbar verbunden. Darüber hinaus betrifft die vorliegende Erfindung eine adaptive Greifvorrichtung mit einem solchen Greiffinger.

Das Interesse richtet sich vorliegend auf Greifvorrichtungen, welche zum Erfassen und Halten eines Teils verwendet werden. Derartige Greifvorrichtungen können beispielsweise in Robotern, Fertigungsanlagen oder dergleichen eingesetzt werden. Aus dem Stand der Technik sind adaptive Greifvorrichtungen bekannt, welche Greiffinger aufweisen, welche den sogenannten Fin Ray Effect^{®} beziehungsweise den Flossenstrahl-Effekt nutzen. Solche Greiffinger bewegen sich bei Druckbelastung nicht, wie man erwarten sollte, von der Druckkraft weg, sondern krümmen sich in Richtung der Druckkraft.

Solche Greifvorrichtung oder Greiffinger, welche den Fin Ray Effect^{®} nutzen, umfassen üblicherweise ein erstes und ein zweites Bandelement, welche flexibel ausgebildet sind. Die Bandelemente sind zudem an einer Seite miteinander verbunden und bilden einen Teil eines spitzwinkligen Dreiecks. Zwischen den Bandelementen sind Abstandselemente angeordnet und beweglich mit den Bandelementen verbunden. Durch die Abstandselemente werden die Bandelemente auf Abstand gehalten und eine elastische Bewegung des Greiffingers wird ermöglicht. Dabei sind die jeweiligen Abstandselemente üblicherweise gerade ausgebildet und aus einem steifen Material gebildet.

Ein derartiger Greiffinger ist im Bereich der Spitze üblicherweise verhältnismäßig steif beziehungsweise unflexibel ausgebildet. Hier kann eine Punktlast auf ein zu haltendes Teil ausgeübt werden. In einem mittleren Bereich des Greiffingers ist der Greiffinger flexibel ausgebildet und kann beim Greifen eines Teils die Kontur des Teils zumindest bereichsweise annehmen. Bei Teilen mit einer speziellen Form, beispielsweise bei Teilen mit einem rechteckigen Querschnitt, und/oder bei höheren Haltekräften können Überlasten an dem Greiffinger auftreten. Beispielsweise können sich die Bandelemente ungewünscht verformten oder auch die Lager zwischen den Abstandselementen und den Bandelementen belastet werden. Darüber hinaus ist die Anpassbarkeit des Greiffingers begrenzt.

Aus der Veröffentlichung BASSON C I ET AL: "Validating object conformity through geometric considerations of gripper mechanisms" (2017 24TH INTERNATIONAL CONFERENCE ON MECHATRONICS AND MACHINE VISION IN PRACTICE (M2VIP), IEEE, 21. November 2017 (2017-11-21), Seiten 1-6, XP033277484, DOI: 10.1109/M2VIP.2017.8211497) ist bereits ein Greiffinger gattungsgemäßer Art bekannt.

Aus den Schriften JP 2017 001113 A (Versteifungselement zur Versteifung der Fingerspitze) und DE 10 2014 014891 A1 (Reversibel lösbare Abstandselemente zur modularen Anpassung des Greifverhaltens) sind jeweils Aspekte eines erfindungsgemäßen Greiffingers bekannt.

Es ist Aufgabe der vorliegenden Erfindung, eine Lösung aufzuzeigen, wie ein Greiffinger der eingangs genannten Art auf einfache Weise an die Greifaufgabe angepasst werden kann.

Diese Aufgabe wird erfindungsgemäß durch einen Greiffinger sowie durch eine Greifvorrichtung mit den Merkmalen der unabhängigen Ansprüche gelöst. Vorteilhafte Weiterbildungen sind in den abhängigen Ansprüchen angegeben.

Ein erfindungsgemäßer Greiffinger für eine adaptive Greifvorrichtung umfasst ein erstes Bandelement und ein zweites Bandelement, welche flexibel ausgebildet sind. Darüber hinaus umfasst der Greiffinger eine Mehrzahl von Abstandselementen, welche zwischen dem ersten Bandelement und dem zweiten Bandelement angeordnet sind. Hierbei ist ein erstes Ende der jeweiligen Abstandselemente mit dem ersten Bandelement bewegbar verbunden und ein gegenüberliegendes zweites Ende der jeweiligen Abstandselemente ist mit dem zweiten Bandelement bewegbar verbunden. Darüber hinaus ist zumindest eines der Abstandselemente als gekrümmtes Abstandselement ausgebildet, wobei das gekrümmte Abstandselement eine vorbestimmte Krümmung aufweist.

Der Greiffinger kann in einer Greifvorrichtung beziehungsweise einem Greifer eingesetzt werden. Insbesondere kann der Greiffinger in einer mechanischen Greifvorrichtung eingesetzt werden, mittels welcher ein Teil beziehungsweise Bauteil erfasst und gehalten werden kann. Der Greiffinger umfasst das erste Bandelement und das zweite Bandelement. Dabei sind das erste Bandelement und das zweite Bandelement flexibel beziehungsweise elastisch ausgebildet. Das erste Bandelement und das zweite Bandelement können die Form eines Bands aufweisen. Das erste Bandelement und das zweite Bandelement können an einer Spitze des Greiffingers miteinander verbunden sein. An einer der Spitze gegenüberliegenden Seite können die Bandelemente mit einem Verbindungselement miteinander verbunden sein, sodass die Bandelemente und das Verbindungselement ein rechtwinkliges Dreieck bilden. Im Bereich des Verbindungselements kann der Greiffinger innerhalb der Greifvorrichtung gehalten sein. Dabei kann das erste Bandelement eine Greiffläche aufweisen, welche zum Greifen des Teils dient. Diese Greiffläche kann beim Greifen des Teils zumindest bereichsweise an dem Teil anliegen.

Des Weiteren umfasst der Greiffinger die Mehrzahl von Abstandselementen. Diese Abstandselemente sind jeweils zwischen dem ersten Bandelement und dem zweiten Bandelement angeordnet. Die jeweiligen Abstandselemente sind an dem ersten Ende mit dem ersten Bandelement beweglich verbunden und an dem gegenüberliegenden zweiten Ende beweglich mit dem zweiten Bandelement verbunden. Insbesondere sind die Abstandselemente an den jeweiligen Enden an den zugehörigen Bandelementen drehbar gelagert. Zwischen den jeweiligen Enden der Abstandselemente und den zugehörigen Bandelementen kann ein Lager oder Gelenk ausgebildet sein. Ferner kann zwischen den jeweiligen Abstandselementen und den Bandelementen eine Verbindung in Form eines Filmscharniers ausgebildet sein. Insbesondere sind die Verbindung zwischen den Enden eines Abstandselements und den Bandelementen so ausgebildet, dass das Abstandselement zu einer Drehachse, welche parallel zu der Greiffläche verläuft, geschwenkt werden kann. Somit kann sich der Greiffinger an eine Kontur des Teils, welches mit dem Greiffinger gegriffen wird, anpassen. Insbesondere nutzt der Greiffinger den Fin Ray Effect^{®} beziehungsweise den Flossenstrahl-Effekt.

Gemäß einem wesentlichen Aspekt der vorliegenden Erfindung ist zumindest eines der Abstandselemente als gekrümmtes Abstandselement ausgebildet. Dieses zumindest eine gekrümmte Abstandselement weist eine vorbestimmte Krümmung auf, welche verschieden von null ist. Diese vorbestimmte Krümmung weist das gekrümmte Abstandselement im unbelasteten Zustand beziehungsweise ohne äußere Krafteinwirkung auf. Der Greiffinger weist also die Mehrzahl von Abstandselementen auf, von denen zumindest eines als gekrümmtes Abstandselement ausgebildet ist. Es können auch mehrere oder alle der Abstandselemente als gekrümmte Abstandselemente ausgebildet sein. Dabei kann das gekrümmte Abstandselement in eine Richtung senkrecht zu einer Haupterstreckungsrichtung gekrümmt beziehungsweise ausgewölbt sein. Somit ist das gekrümmte Abstandselement elastisch ausgebildet und/oder aus einem elastischen Material gefertigt. Insbesondere ist vorgesehen, dass sich das gekrümmte Abstandselement bei dem Greifen des Teils elastisch verformt. Somit kann eine elastische Verbindung zwischen dem ersten Bandelement und dem zweiten Bandelement bereitgestellt werden. Die mechanischen Eigenschaften des gekrümmten Abstandselements können durch die Krümmung beziehungsweise die Formgebung vorgegeben werden. Somit kann das gekrümmte Abstandselement an das zu greifende Teil beziehungsweise die Greifaufgabe angepasst werden. Zudem ergeben sich für den Greiffinger zusätzliche Freiheitsgrade.

Bevorzugt ist das gekrümmte Abstandselement an dem ersten Ende und/oder an dem zweiten Ende gekrümmt ausgebildet. Das gekrümmte Abstandselement weist die vorbestimmte Krümmung auf. Diese Krümmung kann sich über die gesamte Länge des gekrümmten Abstandselements erstrecken. Bevorzugt kann sich diese Krümmung des gekrümmten Abstandselements auch bis zu dem ersten Ende und/oder dem zweiten Ende erstrecken. Durch die Krümmung an dem ersten Ende und/oder dem zweiten Ende beziehungsweise an den Verbindungsbereichen zwischen dem gekrümmten Abstandselement und den Bandelementen kann eine abrupte Änderung der Richtung der Kraft vermieden werden. Ferner kann eine punktuelle oder lokale Krafteinwirkung auf die Verbindungsbereiche verhindert werden. Auf diese Weise kann eine lokale Überlast in den Verbindungsbereichen entgegengewirkt werden. Damit kann die Beständigkeit des Greiffingers verbessert werden. Darüber hinaus können das erste Bandelement und/oder das zweite Bandelement elastisch ausgebildet werden, wodurch die Anpassbarkeit an das zu greifende Teil verbessert wird.

Nach der Erfindung ist das gekrümmte Abstandselement derart ausgebildet, dass dieses bei einer Verformung infolge einer Krafteinwirkung auf das erste Bandelement ein zu dem gekrümmten Abstandselement benachbartes Abstandselement berührt. Wenn das Teil mittels des Greiffingers gegriffen wird, wird das erste Bandelement elastisch verformt. Hierbei erfolgt eine Kraftübertragung von dem ersten Bandelement über die Abstandselemente auf das zweite Bandelement. Dabei verformt sich das zumindest eine gekrümmte Abstandselement elastisch.

Insbesondere verformt sich das gekrümmte Abstandselement in Richtung zumindest eines benachbarten Abstandselements. Dabei können die Formgebung und/oder die mechanischen Eigenschaften des gekrümmten Abstandselements so bestimmt sein, dass dieses bei der Verformung das benachbarte Abstandselement berührt. Somit ist die elastische Verformung beziehungsweise die Bewegung des gekrümmten Abstandselements ab einer bestimmten Last durch das benachbarte Abstandselement begrenzt. Damit kann beispielsweise erreicht werden, dass sich die elastische Verformung des gekrümmten Abstandselements mit zunehmender Krafteinwirkung von außen verringert. Hierbei können zudem durch die Abstände der Abstandselemente zueinander die mechanischen Eigenschaften angepasst werden. Das gekrümmte Abstandselement kann auch so ausgebildet sein, dass es ohne äußere Krafteinwirkung auf den Greiffinger zumindest ein benachbartes Abstandselement berührt.

In einer weiteren Ausgestaltung ist das gekrümmte Abstandselement im Querschnitt oval ausgebildet. Beispielsweise kann das gekrümmte Abstandselement im Querschnitt elliptisch ausgebildet sein. Das gekrümmte Abstandselement kann die Form eines Bands mit einem ovalen Querschnitt aufweisen. Durch das Aspektverhältnis beziehungsweise das Verhältnis zwischen Länge und Breite des gekrümmten Abstandselements kann die Steifigkeit des Abstandselements vorgegeben werden. Zudem können die mechanischen Eigenschaften durch die Ausrichtung des gekrümmten ovalen Abstandselementes beeinflusst werden. Somit kann der Greiffinger auf einfache Weise an die Greifaufgabe angepasst werden.

Gemäß einer alternativen Ausführungsform weist der Greiffinger zwei benachbarte gekrümmte Abstandselemente auf, wobei die zwei benachbarten gekrümmten Abstandselemente in entgegengesetzte Richtungen gewölbt sind. Diese gekrümmten Abstandselemente können bandförmig ausgebildet sein. Dabei kann eines der gekrümmten Abstandselemente in die erste Richtung ausgebaucht sein und das andere der Abstandselemente kann in die entgegengesetzte Richtung ausgebaucht sein. Die zwei benachbarten gekrümmten Abstandselemente können zusammen im Querschnitt eine im Wesentlichen ovale Form aufweisen. Hierdurch kann die Formgebung von jedem der gekrümmten Abstandselemente an den Anwendungsfall angepasst werden.

In einer weiteren Ausführungsform ist zumindest eines der Abstandselemente gerade ausgebildet. Wie zuvor erläutert, ist zumindest eines der Abstandselemente als gekrümmtes Abstandselement ausgebildet. Zudem kann zumindest eines der Abstandselemente als gerades Abstandselement ausgebildet sein. Dieses gerade Abstandselement weist insbesondere keine Krümmung auf. Insbesondere ist das gerade Abstandselement steif ausgebildet beziehungsweise weist im Vergleich zu dem gekrümmten Abstandselement eine deutlich höhere Steifigkeit auf. Das gerade Abstandselement kann zudem aus einem steifen Material gefertigt sein. Durch die Auswahl von gekrümmten und geraden Abstandselementen können die mechanischen Eigenschaften des Greiffingers individuell angepasst werden.

Weiterhin ist vorteilhaft, wenn der Greiffinger zumindest ein Versteifungselement aufweist, welches zwischen dem ersten Bandelement und dem zweiten Bandelement angeordnet ist. Beispielsweise kann dieses Versteifungselement fest mit dem ersten Bandelement und dem zweiten Bandelement verbunden sein. Dieses Versteifungselement kann insbesondere im Bereich einer Spitze des Greiffingers angeordnet sein. Auf diese Weise können kleine Teile oder Teile mit einem verhältnismäßig geringen Durchmesser präzise gegriffen werden.

In einer weiteren Ausführungsform sind die jeweiligen Abstandselemente reversibel lösbar mit dem ersten Bandelement und dem zweiten Bandelement verbunden. Insbesondere können die jeweiligen Abstandselemente zerstörungsfrei lösbar mit den Bandelementen verbunden sein. Es kann auch vorgesehen sein, dass nur einige der Abstandselemente reversibel lösbar mit den Bandelementen verbunden sind. Die Abstandselemente und die Bandelemente können zueinander korrespondierende Befestigungselemente aufweisen, um die lösbare Verbindung bereitzustellen. Beispielsweise können die Abstandselemente mit den Bandelementen mit einer Rastverbindung, einer Schnappverbindung, einer Schwalbenschwanzverbindung oder dergleichen verbunden sein. Dies ermöglicht eine einfache und zuverlässige Verbindung zwischen den Abstandselementen und den Bandelementen. Zudem können die Abstandselemente ausgetauscht werden.

Hierbei ist insbesondere vorgesehen, dass der Greiffinger modular ausgebildet ist und unterschiedliche Typen von Abstandselementen aufweist, die mit dem ersten Bandelement und dem zweiten Bandelement verbindbar sind beziehungsweise reversibel lösbar verbunden sind. Die Bandelemente können entsprechende Befestigungselemente aufweisen, an denen Abstandselemente angeordnet werden können. Je nach Einsatzgebet des Greiffingers beziehungsweise in Abhängigkeit von dem zu greifenden Teil können dann die passenden Abstandselemente ausgewählt werden. Beispielsweise kann ein gekrümmtes oder ein gerades Abstandselement gewählt werden. Bei der Verwendung eines gekrümmten Abstandselements kann insbesondere zwischen unterschiedlichen Krümmungen oder Formen gewählt werden. Beispielsweise kann der Greiffinger in Form eines Baukastensystems mit unterschiedlichen Typen von Abstandselementen bereitgestellt werden.

Bevorzugt ist der Greiffinger mittels eines additiven Fertigungsverfahrens hergestellt. Insbesondere ist vorgesehen, dass der Greiffinger mittels eines dreidimensionalen Druckverfahrens hergestellt ist. Der Greiffinger kann aus einem Kunststoff hergestellt werden. Beispielsweise kann der Greiffinger aus einem elastischen Kunststoff beziehungsweise aus einem Elastomer hergestellt werden. Die Bandelemente und die Abstandselemente können aus dem gleichen Material aber auch aus unterschiedlichen Materialien gefertigt werden. Das additive Fertigungsverfahren ermöglicht eine einfache und kostengünstige Herstellung des Greiffingers.

Eine erfindungsgemäße adaptive Greifvorrichtung dient zum Erfassen und Halten eines Teils. Die Greifvorrichtung umfasst zumindest einen erfindungsgemäßen Greiffinger. Insbesondere ist die Greifvorrichtung als mechanischer Greifer ausgebildet. Die Greifvorrichtung kann zudem einen Antrieb zum Bewegen der Greiffinger aufweisen. Dabei kann der Antrieb der Greifvorrichtung mechanisch, pneumatisch oder elektrisch ausgebildet sein.

Ein weiterer Aspekt der Erfindung betrifft ein Verfahren zum Herstellen eines Greiffingers. Hierbei werden ein erstes Bandelement und ein zweites Bandelement bereitgestellt, welche flexibel ausgebildet sind. Des Weiteren wird eine Mehrzahl von Abstandselementen zwischen dem ersten Bandelement und dem zweiten Bandelement angeordnet, wobei ein erstes Ende der jeweiligen Abstandselemente mit dem ersten Bandelement bewegbar verbunden wird und ein gegenüberliegendes zweites Ende der jeweiligen Abstandselemente mit dem zweiten Bandelement bewegbar verbunden wird. Dabei ist vorgesehen, dass zumindest eines der Abstandselemente als gekrümmtes Abstandselement ausgebildet wird, wobei das gekrümmte Abstandselement eine vorbestimmte Krümmung aufweist.

Die mit Bezug auf den erfindungsgemäßen Greiffinger vorgestellten bevorzugten Ausführungsformen und deren Vorteile gelten entsprechend für die erfindungsgemäße Greifvorrichtung sowie für das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen, welcher durch die Ansprüche definiert ist.

Die Erfindung wird nun anhand von bevorzugten Ausführungsbeispielen sowie unter Bezugnahme auf die beigefügten Zeichnungen näher erläutert. Dabei zeigen:
- FIG 1: eine schematische Darstellung eines Greiffingers gemäß dem Stand der Technik;
- FIG 2: eine schematische Darstellung eines Greiffingers gemäß einer ersten Ausführungsform;
- FIG 3: eine Greifvorrichtung mit einem Greiffinger gemäß dem Stand der Technik und mit einem Greiffinger gemäß der ersten Ausführungsform;
- FIG 4: eine schematische Darstellung eines Greiffingers gemäß einer zweiten Ausführungsform;
- FIG 5: eine schematische Darstellung eines Greiffingers gemäß einer dritten Ausführungsform; und
- FIG 6: eine schematische Darstellung eines Greiffingers gemäß einer vierten Ausführungsform.

In den Figuren werden gleiche oder funktionsgleiche Elemente mit den gleichen Bezugszeichen versehen.

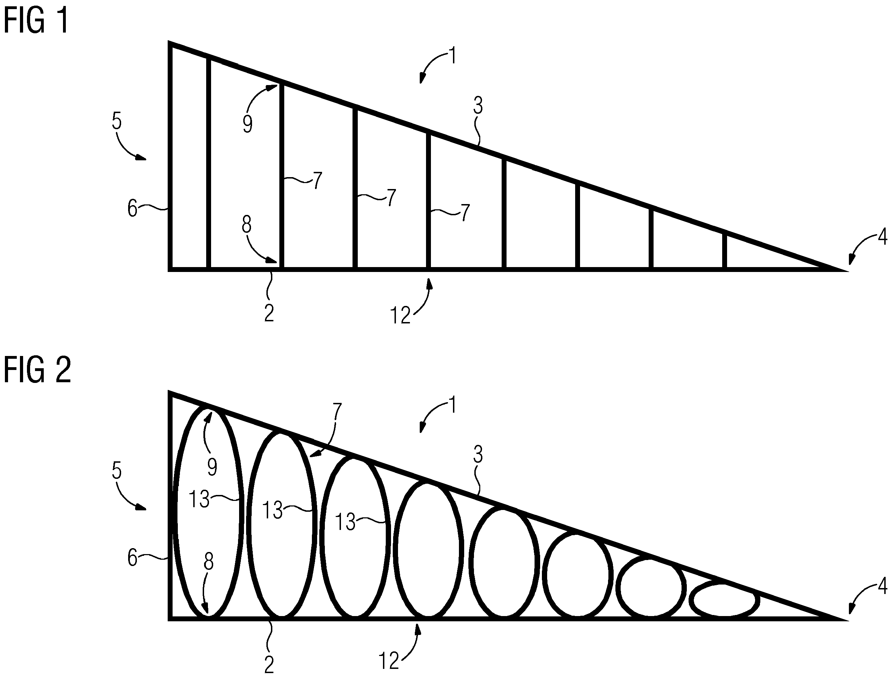

FIG 1 zeigt in einer schematischen Darstellung einen Greiffinger 1 gemäß dem Stand der Technik. Der Greiffinger 1 umfasst ein erstes Bandelement 2 sowie ein zweites Bandelement 3. Das erste Bandelement 2 und das zweite Bandelement 3 sind aus einem flexiblen Material, beispielsweise einem entsprechenden Kunststoff, gefertigt. Dabei sind das erste Bandelement 2 das zweite Bandelement 3 an einer Spitze 4 des Greiffingers 1 miteinander verbunden. An einer der Spitze 4 gegenüberliegenden Seite 5 sind das erste Bandelement 2 und das zweite Bandelement 3 mittels eines Verbindungselements 6 miteinander verbunden. Darüber hinaus umfasst der Greiffinger 1 eine Mehrzahl von Abstandselementen 7, welche zwischen dem ersten Bandelement 2 und dem zweiten Bandelement 3 angeordnet sind. Die jeweiligen Abstandselemente 7 weisen ein erstes Ende 8, welches mit dem ersten Bandelement 2 verbunden ist, und ein zweites Ende 9, welches mit dem zweiten Bandelement 3 verbunden ist, auf. Dabei sind die jeweiligen Abstandselemente 7 an den Enden 8, 9 beweglich mit den Bandelementen 2, 3 verbunden.

Der Greiffinger 1 kann in einer Greifvorrichtung 10 zum Greifen eines Teils 11 verwendet werden. Dabei weist das erste Bandelement 2 eine Greiffläche 12 auf, welche beim Greifen eines Teils 11 zumindest bereichsweise mit dem Teil 11 in Kontakt ist. Im Bereich der Greiffläche 12 kann ein Material aufgebracht sein, welches die Reibung zwischen dem Greiffinger 1 und dem Teil 11 erhöht. Dabei nutzt der Greiffinger 1 den sogenannten Fin Ray Effect^{®} beziehungsweise Flossenstrahl-Effekt. Der Greiffinger 1 bewegt sich bei einer Druckbelastung nicht, wie man erwarten sollte, von der Druckkraft weg, sondern krümmt sich in Richtung der Druckkraft. Bei dem Greiffinger 1 gemäß dem Stand der Technik sind die Abstandselemente 7 steif ausgebildet. Dies kann bei bestimmten Formen der Teile 11 und/oder Abhängigkeit von der Greifkraft zu einer ungewollten Deformation des Greiffingers 1 führen.

Im Vergleich hierzu zeigt FIG 2 eine schematische Darstellung eines Greiffinger 1 gemäß einer ersten Ausführungsform. Dieser Greiffinger 1 unterscheidet sich von Greiffinger 1 gemäß FIG 1 dadurch, dass die Abstandselemente 7 als gekrümmte Abstandselemente 13 ausgebildet sind. In dem vorliegenden Ausführungsbeispiel sind die gekrümmten Abstandselemente 13 derart ausgebildet, dass diese einen ovalen Querschnitt aufweisen. Auch diese gekrümmten Abstandselemente 13 sind an dem ersten Ende 8 beweglich mit dem ersten Bandelement 2 und an dem zweiten Ende 9 beweglich mit dem zweiten Bandelement 3 verbunden.

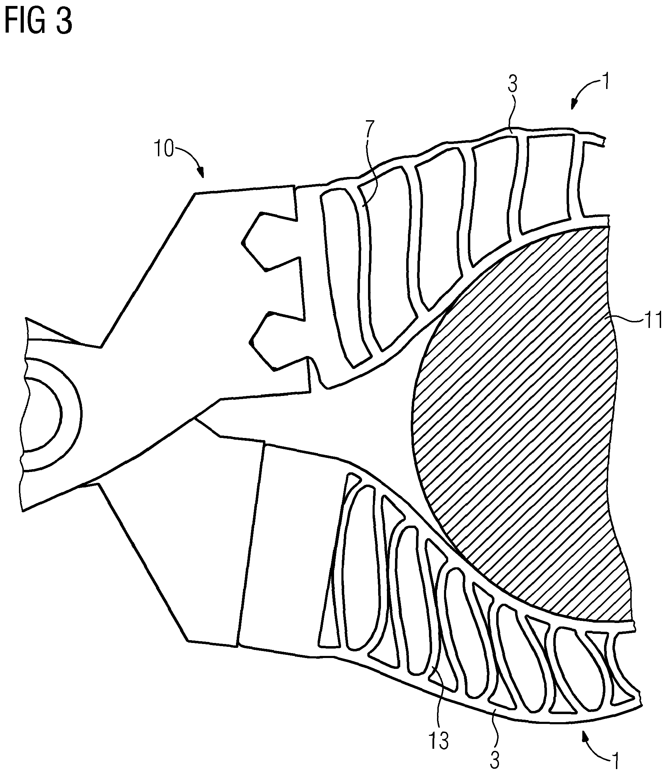

FIG 3 zeigt eine Darstellung einer Greifvorrichtung 10, welche beispielhaft an der Oberseite einen Greiffinger 1 gemäß dem Stand der Technik und an der Unterseite einen Greiffinger 1 gemäß der ersten Ausführungsform aufweist. Hier ist zu erkennen, dass sich bei dem Greiffinger 1 gemäß dem Stand der Technik aufgrund des großen Durchmessers des Teils 11 eine ungewollte Deformation des zweiten Bandelements 3 ergibt. Hierdurch kann die Funktionsfähigkeit der Greifvorrichtung 10 nicht gewährleistet werden. Darüber hinaus besteht die Gefahr, dass der Greiffinger 1 beschädigt wird. Im Vergleich hierzu ist bei dem Greiffinger 1 gemäß der ersten Ausführungsform an der Unterseite der Greifrichtung 10 keine ungewollte Verformung der einzelnen Komponenten des Greiffingers 1 zu erkennen.

Diese Verbesserung des Greiffingers 1 mit den gekrümmten Abstandselemente 13 ist zum einen dadurch begründet, dass die gekrümmten Abstandselemente 13 beziehungsweise die ovalen Abstandselemente eine elastische Verbindung zwischen dem ersten Bandelement 2 und dem zweiten Bandelement 3 bereitstellen. Hierdurch wird die Absorption von Kräften durch Materialverformung über größere Materialabschnitte verteilt. Daher werden Spitzen in der Verformung vermieden. Die Steifigkeit beziehungsweise die elastischen Eigenschaften der gekrümmten Abstandselemente 13 kann durch das Aspektverhältnis der gekrümmten Abstandselemente 13 bestimmt werden.

Darüber hinaus ist die elastische Verformung der ovalen Abstandselemente beziehungsweise gekrümmten Abstandselemente 13 durch die benachbarten Abstandselemente 13 begrenzt. Wenn die Abstandselemente 13 einen vorbestimmten Abstand zueinander aufweisen, ist die Deformation der jeweiligen gekrümmten Abstandselemente 13 begrenzt, sobald ein bestimmter Schwellwert erreicht wird. Dies ist der Fall, wenn sich die benachbarten Abstandselemente 13 aufgrund der Verformung gegenseitig berühren. In diesem Fall können die elastischen beziehungsweise mechanischen Eigenschaften der gekrümmten Abstandselemente 13 durch den Abstand der benachbarten gekrümmten Abstandselemente 13 zueinander bestimmt werden.

Zudem ergibt sich der Vorteil, dass die gekrümmten Abstandselemente 13 an den Enden 8, 9 ebenfalls eine Krümmung aufweisen. In die Bandelemente 2, 3 lateral induzierte Kräfte können dadurch entlang der Bandelemente 2, 3 kompensiert werden. Darüber hinaus können punktuelle Lasten oder Überlasten an den Verbindungsbereichen zwischen den gekrümmten Abstandselementen 13 und den Bandelementen 2, 3 verhindert werden. Durch die Krümmung der gekrümmten Abstandselemente 13 kann die Übertragung der Last zwischen den Abstandselemente 13 zu den Bauelementen 2, 3 beeinflusst werden.

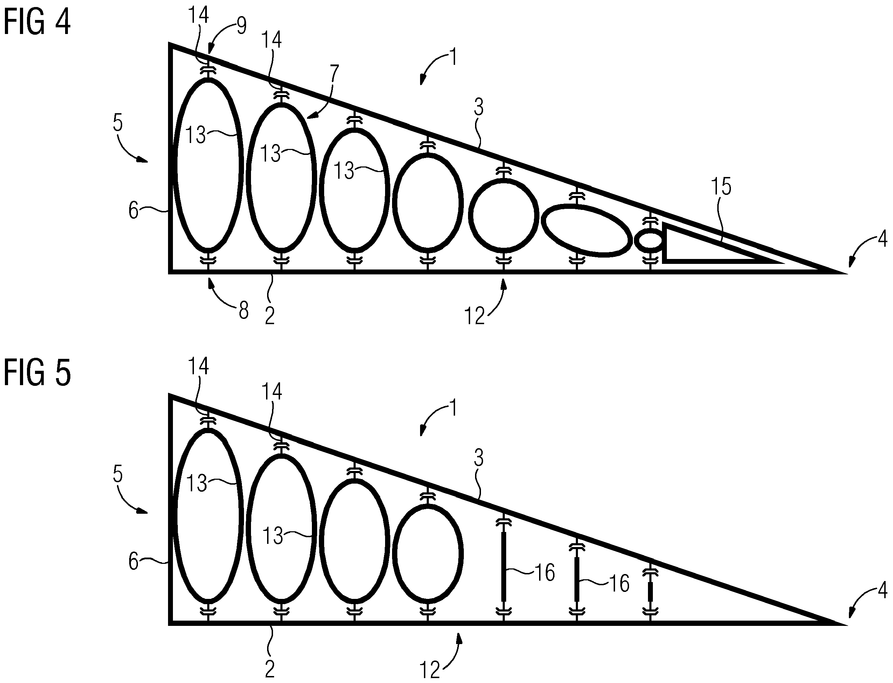

FIG 4 zeigt einen Greiffinger 1 gemäß einer zweiten Ausführungsform in einer schematischen Darstellung. Hierbei sind die gekrümmten Abstandselemente 13 ebenfalls so ausgebildet, dass diese einen ovalen Querschnitt aufweisen. Darüber hinaus sind an den Enden 8, 9 der Abstandselemente 13 entsprechende Befestigungselemente 14 vorgesehen, mittels welchem die Abstandselemente 13 reversibel lösbar mit den Bandelementen 2, 3 verbunden werden können. Hierdurch ergibt sich ein modularer Aufbau des Greiffingers 1, bei dem die jeweiligen Abstandselemente 13 ausgetauscht werden können. Darüber hinaus umfasst der Greiffinger 1 ein Versteifungselement 15, welches zur mechanischen Versteifung des Greiffingers 1 im Bereich der Spitze 4 dient. Dieses Versteifungselement 15 kann steif ausgebildet sein und fest mit dem ersten Bandelement 2 und dem zweiten Bandelement 3 verbunden sein.

FIG 5 zeigt in einer schematischen Darstellung eine dritte Ausführungsform eines Greiffingers 1. Hierbei weist der Greiffinger 1 sowohl gekrümmte Abstandselemente 13 als auch Abstandselemente 7 auf, welche als gerade Abstandselemente 16 ausgebildet sind. Die geraden Abstandselemente 16 weisen keine Krümmung auf und können steif ausgebildet sein. Somit kann der vordere Bereich des Greiffingers 1 mit den geraden Abstandselementen 16 im Vergleich zu dem hinteren Teil des Greiffingers 1 mit den gekrümmten Abstandselementen 13 steifer ausgebildet werden. Auch in diesem Fall sind die jeweiligen Abstandselemente 13, 16 durch die Befestigungselemente 14 reversibel lösbar mit den Bandelementen 2, 3 verbunden.

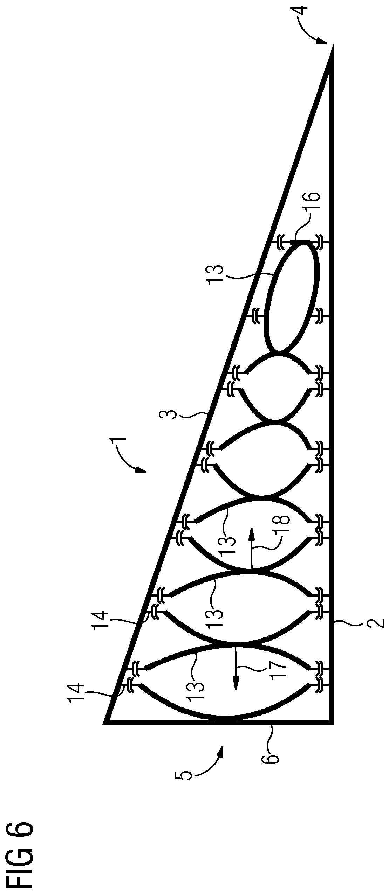

FIG 6 zeigt in einer schematischen Darstellung eine vierte Ausführungsform eines Greiffingers 1 in einer schematischen Darstellung. Hierbei weist der Greiffinger 1 ebenfalls gekrümmte Abstandselemente 13 auf. Dabei sind benachbarte gekrümmte Abstandselemente 13 so ausgebildet, dass eines der Abstandselemente 13 in eine erste Richtung 17 gekrümmt ist und das andere der Abstandselemente 13 eine entgegengesetzte, zweite Richtung 18 gekrümmt ist. Diese beiden benachbarten Abstandselemente 13 bilden ebenfalls einen im Wesentlichen ovalen Querschnitt. Zudem weist der Greiffinger 1 ein gekrümmtes Abstandselement 13, welches einen ovalen Querschnitt aufweist, sowie ein gerades Abstandselement 16 auf. Durch den modularen Aufbau des Greiffingers 1 kann dieser an die jeweilige Greifsituation beziehungsweise an das zu greifende Teil 11 angepasst werden.

### Bezugszeichenliste

- 1: Greiffinger
- 2: erstes Bandelement
- 3: zweites Bandelement
- 4: Spitze
- 5: Seite
- 6: Verbindungselement
- 7: Abstandselement
- 8: erstes Ende
- 9: zweites Ende
- 10: Greifvorrichtung
- 11: Teil
- 12: Greiffläche
- 13: gekrümmtes Abstandselement
- 14: Befestigungselement
- 15: Versteifungselement
- 16: gerades Abstandselement
- 17: erste Richtung
- 18: zweite Richtung

## Patentansprüche

1. Greiffinger (1) für eine adaptive Greifvorrichtung (10) umfassend:
- ein erstes Bandelement (2) und ein zweites Bandelement (3), welche flexibel ausgebildet sind, und
- eine Mehrzahl von Abstandselementen (7, 13, 16), welche zwischen dem ersten Bandelement (2) und dem zweiten Bandelement (3) angeordnet sind,
- wobei ein erstes Ende (8) der jeweiligen Abstandselemente (7, 13, 16) mit dem ersten Bandelement (2) bewegbar verbunden ist und ein gegenüberliegendes zweites Ende (9) der jeweiligen Abstandselemente (7, 13, 16) mit dem zweiten Bandelement (3) bewegbar verbunden ist,
- wobei zumindest eines der Abstandselemente (7, 13, 16) als gekrümmtes Abstandselement (13) ausgebildet ist, wobei das gekrümmte Abstandselement (13) eine vorbestimmte Krümmung aufweist,
**dadurch gekennzeichnet, dass**
- das gekrümmte Abstandselement (13) derart ausgebildet ist, dass dieses bei einer Verformung infolge einer Krafteinwirkung auf das erste Bandelement (2) ein zu dem gekrümmten Abstandselement (13) benachbartes Abstandselement (7, 13, 16) berührt.

2. Greiffinger (1) nach Anspruch 1, **dadurch gekennzeichnet, dass** das gekrümmte Abstandselement (13) an dem ersten Ende (8) und/oder an dem zweiten Ende (9) gekrümmt ausgebildet ist.

3. Greiffinger (1) nach einem der vorhergehenden Ansprüche, **dadurch gekennzeichnet, dass** das gekrümmte Abstandselement (13) im Querschnitt oval ausgebildet ist.

4. Greiffinger (1) nach einem der Ansprüche 1 bis 2, **dadurch gekennzeichnet, dass** der Greiffinger (1) zwei benachbarte gekrümmte Abstandselemente (13) aufweist, wobei die zwei benachbarten gekrümmten Abstandselemente (13) in entgegengesetzte Richtungen (17, 18) gewölbt sind.

5. Greiffinger (1) nach einem der vorhergehenden Ansprüche, **dadurch gekennzeichnet, dass** zumindest eines der Abstandselemente (7, 13, 16) als gerades Abstandselement (16) ausgebildet ist.

6. Greiffinger (1) nach einem der vorhergehenden Ansprüche, **dadurch gekennzeichnet, dass** der Greiffinger (1) zumindest ein Versteifungselement (15) aufweist, welches zwischen dem ersten Bandelement (2) und dem zweiten Bandelement (3) angeordnet ist.

7. Greiffinger (1) nach einem der vorhergehenden Ansprüche, **dadurch gekennzeichnet, dass** die jeweiligen Abstandselemente (7, 13, 16) reversibel lösbar mit dem ersten Bandelement (2) und dem zweiten Bandelement (3) verbunden sind.

8. Greiffinger (1) nach Anspruch 7 , **dadurch gekennzeichnet, dass** der Greiffinger (1) modular ausgebildet ist und unterschiedliche Typen von Abstandselementen (7, 13, 16) aufweist, die mit dem ersten Bandelement (2) und dem zweiten Bandelement (3) reversibel lösbar verbunden sind.

9. Greiffinger (1) nach einem der vorhergehenden Ansprüche, **dadurch gekennzeichnet, dass** der Greiffinger (1) mittels eines additiven Fertigungsverfahrens hergestellt ist.

10. Adaptive Greifvorrichtung zum Erfassen und Halten eines Teils umfassend zumindest einen Greiffinger (1) nach einem der vorhergehenden Ansprüche.

## Claims

1. Gripping finger (1) for an adaptive gripping device (10), comprising:
- a first strip element (2) and a second strip element (3), which are flexible, and
- a plurality of spacing elements (7, 13, 16), which are arranged between the first strip element (2) and the second strip element (3),
- wherein a first end (8) of the respective spacing elements (7, 13, 16) is movably connected to the first strip element (2) and an opposite second end (9) of the respective spacing elements (7, 13, 16) is movably connected to the second strip element (3),
- wherein at least one of the spacing elements (7, 13, 16) is designed as a curved spacing element (13), wherein the curved spacing element (13) has a predefined curvature, **characterized in that**
- the curved spacing element (13) is designed in such a manner that, in the event of a deformation as a result of an action of force on the first element (2), said curved spacing element (13) touches a spacing element (7, 13, 16) which is adjacent to the curved spacing element (13).

2. Gripping finger (1) according to Claim 1, **characterized in that** the curved spacing element (13) is curved at the first end (8) and/or at the second end (9).

3. Gripping finger (1) according to either of the preceding claims, **characterized in that** the curved spacing element (13) is oval in cross section.

4. Gripping finger (1) according to either of Claims 1 and 2, **characterized in that** the gripping finger (1) has two adjacent curved spacing elements (13), wherein the two adjacent curved spacing elements (13) are arched in opposite directions (17, 18).

5. Gripping finger (1) according to one of the preceding claims, **characterized in that** at least one of the spacing elements (7, 13, 16) is in the form of a rectilinear spacing element (16).

6. Gripping finger (1) according to one of the preceding claims, **characterized in that** the gripping finger (1) has at least one stiffening element (15), which is arranged between the first strip element (2) and the second strip element (3).

7. Gripping finger (1) according to one of the preceding claims, **characterized in that** the respective spacing elements (7, 13, 16) are reversibly releasably connected to the first strip element (2) and to the second strip element (3).

8. Gripping finger (1) according to Claim 7, **characterized in that** the gripping finger (1) is modular and has different types of spacing elements (7, 13, 16), which are reversibly releasably connected to the first strip element (2) and to the second strip element (3).

9. Gripping finger (1) according to one of the preceding claims, **characterized in that** the gripping finger (1) is produced by means of an additive production method.

10. Adaptive gripping device for grasping and holding a part, comprising at least one gripping finger (1) according to one of the preceding claims.

## Revendications

1. Doigt (1) de préhension d'un dispositif (10) de préhension adaptative, comprenant :
- un premier élément (2) de bande et un deuxième élément (3) de bande, qui sont souples, et
- une pluralité d'éléments (7, 13, 16) d'entretoisement, qui sont disposés entre la premier élément (2) de bande et le deuxième élément (3) de bande,
- dans lequel un premier bout (8) des éléments (7, 13, 16) d'entretoisement respectifs est relié, avec possibilité de se déplacer, au premier élément (2) de bande et un deuxième bout (9) opposé des éléments (7, 13, 16) d'entretoisement respectifs est relié, avec possibilité de se déplacer, au deuxième élément (3) de bande,
- dans lequel au moins l'un des éléments (7, 13, 16) d'entretoisement est constitué sous la forme d'un élément (13) d'entretoisement incurvé, l'élément (13) d'entretoisement incurvé ayant une courbure définie à l'avance,
**caractérisé en ce que**
- l'élément (13) d'entretoisement incurvé est constitué de manière à ce que celui-ci, lors d'une déformation en raison de l'application d'une force au premier élément (2) de bande, touche un élément (7, 13, 16) d'entretoisement voisin de l'élément (13) d'entretoisement incurvé.

2. Doigt (1) de préhension suivant la revendication 1, **caractérisé en ce que** l'élément (13) d'entretoisement incurvé est constitué, en étant incurvé au premier bout (8) et/ou au deuxième bout (9).

3. Doigt (1) de préhension suivant l'une des revendications précédentes, **caractérisé en ce que** l'élément (13) d'entretoisement incurvé est ovale en section transversale.

4. Doigt (1) de préhension suivant l'une des revendications 1 ou 2, **caractérisé en ce que** le doigt (1) de préhension a deux éléments (13) d'entretoisement incurvés voisins, les deux éléments (13) d'entretoisement incurvés voisins étant cintrés dans des sens (17, 18) contraires.

5. Doigt (1) de préhension suivant l'une des revendications précédentes, **caractérisé en ce qu'**au moins l'un des éléments (7, 13, 16) d'entretoisement est constitué sous la forme d'un élément (16) d'entretoisement droit.

6. Doigt (1) de préhension suivant l'une des revendications précédentes, **caractérisé en ce que** le doigt (1) de préhension a au moins un élément (15) de raidissement, qui est disposé entre le premier élément (2) de bande et le deuxième élément (3) de bande.

7. Doigt (1) de préhension suivant l'une des revendications précédentes, **caractérisé en ce que** les éléments (7, 13, 16) d'entretoisement respectifs sont reliés, de manière détachable réversiblement, au premier élément (2) de bande et au deuxième élément (3) de bande.

8. Doigt (1) de préhension suivant la revendication 7, **caractérisé en ce que** le doigt (1) de préhension est constitué de manière modulaire et a des types différents d'éléments (7, 13, 16) d'entretoisement, qui sont reliés de manière détachable réversiblement au premier élément (2) de bande et au deuxième (3) de bande.

9. Doigt (1) de préhension suivant l'une des revendications précédentes, **caractérisé en ce que** le doigt (1) de préhension est fabriqué au moyen d'un procédé de fabrication additive.

10. Dispositif de préhension adaptatif pour saisir et retenir une pièce, comprenant au moins un doigt (1) de préhension suivant l'une des revendications précédentes.
